# EUROPÄISCHE PATENTSCHRIFT

(11) **EP 1 312 534 B1**
(45) Veröffentlichungstag und Bekanntmachung des Hinweises auf die Patenterteilung: **19.07.2006**
(21) Anmeldenummer: 02090375.3
(22) Anmeldetag: 11.11.2002
(51) Int. Cl.: B62D 15/02, G01B 7/30

(54) **Vorrichtung zur Bestimmung des Lenkwinkels eines Lenkrades**
Steering wheel steering angle determination apparatus
Dispositif pour la détermination de l'angle de braquage d'un volant

(30) Priorität: 20.11.2001 DE 10158287
(43) Veröffentlichungstag der Anmeldung: 21.05.2003
(73) Patentinhaber: Takata-Petri AG, 63743 Aschaffenburg (DE)
(72) Erfinder: Font, Joachim, 76846 Hauenstein (DE)
(74) Vertreter: Baumgärtel, Gunnar

(56) Entgegenhaltungen:
- DE-A- 19 908 522
- US-A- 5 243 188
- US-A- 5 646 523
- US-A1- 2001 013 774

## Beschreibung

Die Erfindung betrifft eine Vorrichtung zur Bestimmung des Lenkwinkels eines Lenkrades nach dem Oberbegriff des Patentanspruchs 1.

Eine derartige Vorrichtung umfasst einen Codeträger sowie eine Einrichtung zur Abtastung eines auf dem Codeträger vorgesehenen Codes, die bei einer Änderung des Lenkwinkels zueinander bewegt werden, wobei die Einrichtung zur Abtastung des Codes ein Ausgangssignal erzeugt, aus dem der Lenkwinkel ermittelbar ist.

Derartige Systeme zur Bestimmung des Lenkwinkels eines Lenkrades, insbesondere in Kraftfahrzeugen, sind allgemein bekannt.

Besondere Probleme können bei der Realisierung derartiger Systeme auftreten, wenn der Lenkwinkel nicht nur zwischen den Werten von 0° und 360° bestimmt werden soll, sondern wenn darüber hinaus auch noch die Anzahl vollständiger Umdrehungen des Lenkrades erkannt werden soll. Derartige Systeme zur Bestimmung des Lenkwinkels werden insbesondere benötigt, wenn die Hinterachse eines Fahrzeugs elektronisch direkt über den Lenkwinkelsensor gesteuert werden soll oder wenn mit der Beleuchtungseinrichtung eines Kraftfahrzeugs die Fahrbahn je nach Fahrtrichtung variabel ausgeleuchtet werden soll.

Hierbei besteht das Problem, dass der Umdrehungszähler auch dann aktiviert sein soll, wenn das Bordnetz des entsprechenden Kraftfahrzeugs abschaltet ist. Dies schließt eine rein elektronische Lösung aus, wenn nicht auf einen zusätzlichen Akkubetrieb zurückgegriffen werden soll.

Aus der DE 198 07 522 A1 ist es bekannt, zur Bestimmung des Lenkwinkels einen um die Lenkachse geführten Riemen zu verwenden, dessen Position mittels eines Sensors erfasst wird. Das System ist derart ausgelegt, dass der Riemen bei mehreren Umdrehungen des Lenkrades höchstens einmal umläuft.

Aus der EP 0 853 355 A2 ist eine einstufige Getriebelösung mit einem auf der Lenkachse gelagerten Innenzahnrad und einem zugeordneten Außenzahnrad bekannt, die mit einer unterschiedlichen Anzahl an Zähnen versehen sind.

Der Erfindung liegt das Problem zugrunde, eine neue Vorrichtung zur Erfassung des Lenkwinkels eines Lenkrades zu schaffen, mit der die Anzahl der Umdrehungen des Lenkrades in einfacher Weise ermittelbar ist.

Erfindungsgemäß wird dieses Problem durch die Schaffung einer Vorrichtung mit den Merkmalen des Patentanspruchs 1 gelöst.

Danach wird der Codeträger durch eines von zwei auf einer gemeinsamen Achse axial hintereinander angeordneten Getriebeelementen gebildet, die mit einem durch das Lenkrad angetriebenen Antriebselement in Wirkverbindung stehen und die bei einer Änderung des Lenkwinkels zueinander verdreht werden.

Die erfindungsgemäße Lösung beruht auf der Erkenntnis, aus der Getriebetechnik bekannte Anordnungen, bei denen zwei koaxial zueinander angeordnete Getriebeelemente mit einem gemeinsamen Antriebselement in Wirkverbindung stehen, zur Erzielung einer hohen Übersetzung in einer Vorrichtung zur Erfassung des Lenkwinkels eines Lenkrades zu nutzen. Hierdurch lässt sich anhand der Drehbewegung des entsprechenden Getriebeelementes nicht nur der jeweilige Lenkwinkel zwischen 0° und 360°, sondern insbesondere auch die Anzahl der Umdrehungen des Lenkrades ausgehend von einer definierten Nullpunktlage ermitteln. Insbesondere wird hier unter dem Lenkwinkel nicht einfach ein Winkel zwischen 0° und 360° verstanden, sondern der Lenkwinkel wird als ein absoluter Lenkwinkel angesehen, der ausgehend von einer Referenzlage bei einer Drehung des Lenkrades fortlaufend erhöht wird, etwa bei zehn möglichen Umdrehungen eines Lenkrades zwischen 0° und 360°.

Die erfindungsgemäße Vorrichtung dient nicht in erster Linie zur genauen Bestimmung des Lenkwinkels zwischen 0° und 360°, sondern vielmehr zur Bestimmung der Anzahl der Umdrehungen des Lenkrades ausgehend von der Nullpunktlage. Es geht hier also insbesondere darum, bei der Bestimmung des absoluten Lenkwinkels - von der Nullpunktlage des Lenkrades aus fortlaufend gemessen - Vielfache von 360° (also komplette Umdrehungen) korrekt zu erfassen. Für die präzise Bestimmung des jeweiligen Lenkwinkels innerhalb einer Umdrehung (also zwischen 0° und 360° beziehungsweise 360° und 720° etc.) kann gegebenenfalls ein zusätzlicher Lenkwinkelsensor verwendet werden.

Unter einem Code und einer zugeordneten Einrichtung zur Abtastung des Codes werden vorliegend beliebige, zueinander bewegliche Baugruppen verstanden, die aufgrund einer Relativbewegung ein Ausgangssignal erzeugen, anhand dessen das Ausmaß der Drehbewegung des mit dem Code versehenen Getriebeelementes erfassbar ist. Zur Abtastung des Codes können insbesondere elektrische magnetische oder optische Messprinzipien zur Anwendung kommen. So kann die bei einer Drehung des entsprechenden Getriebeelementes auftretende Änderung eines elektrischen Widerstandes bestimmt werden, nämlich durch Verwendung eines Potentiometers, das den Code in Form eines elektrischen Widerstandes sowie die zugeordnete Abtasteinrichtung in Form eines Abgriffs bildet. Neben dieser besonders einfach zu verwirklichenden Abtastanordnung können beispielsweise ein auf dem Halleffekt basierendes magnetisches Messprinzip oder ein auf der Abtastung definierter Markierungen beruhendes optisches Messprinzip eingesetzt werden.

Die erfindungsgemäße Lösung hat den Vorteil, dass sie als einstufige Lösung kostengünstig und technisch einfach realisierbar ist. Darüber hinaus arbeitet die erfindungsgemäße Vorrichtung geräuscharm.

Als axial hintereinander angeordnete Getriebeelemente eignen sich insbesondere Zahnräder, die mit mindestens einer Gegenverzahnung des Antriebselementes in Eingriff stehen.

Die beiden Getriebeelemente sind derart angeordnet und ausgebildet, dass sie bei einer Änderung des Lenkwinkels um einen Winkel zueinander verdreht werden, der erheblich kleiner ist als der Lenkwinkel, vorzugsweise derart, dass die beiden Getriebeelemente bei der maximal möglichen Änderung des Lenkwinkels (entsprechend der maximal möglichen Anzahl an Umdrehungen des Lenkrades) um einen Winkel von weniger als 360° zueinander verdreht werden.

Die beiden Getriebeelemente sind vorzugsweise koaxial auf der Lenkradachse gelagert.

Weiterhin ist es vorteilhaft, dass eines der beiden Getriebeelemente drehfest und das andere drehbar auf der gemeinsamen Achse gelagert ist, wobei das drehbar gelagerte Getriebeelement als Codeträger dient, also mit dem abzutastenden Code versehen ist. .

Die erforderliche Übersetzung kann insbesondere dadurch erreicht werden, dass die beiden Getriebeelemente eine unterschiedliche Anzahl an Zähnen aufweisen, wobei eine möglichst geringe Differenz der:Anzahl an Zähnen (beispielsweise ein Zahnrad mit 50 Zähnen und ein Zahnrad mit 49 Zähnen) vorteilhaft ist.

Bei dem Antriebselement, das bei einer Drehung des Lenkrades (entsprechend einer Änderung des Lenkwinkels) angetrieben wird und dabei auf die beiden Getriebeelemente einwirkt, kann es sich insbesondere um ein (um seine Mittelachse) drehbar gelagertes Zahnrad handeln, dessen Durchmesser kleiner ist als der Durchmesser der beiden Getriebeelemente und das bezüglich der Getriebeelemente ein Planetenrad bildet.

Die Drehachse des Antriebselementes verläuft bei Anordnung der beiden axial hintereinander angeordneten Getriebeelemente auf der Lenkachse parallel zu dieser und das Antriebselement weist zwei axial hintereinander angeordnete Verzahnungsbereiche auf, von denen jeder mit einem der beiden Getriebeelemente in Eingriff steht.

Gemäß einer Ausführungsform weisen die beiden Verzahnungsbereiche des Antriebselementes die gleiche Form und Anzahl der Zähne auf. Es können jedoch auch unterschiedlich gestaltete Verzahnungsbereiche mit einer unterschiedlichen Anzahl an Zähnen vorgesehen sein.

Ferner können mehrere Antriebselemente vorgesehen sein, die entlang des Umfangs der beiden Getriebeelemente voneinander beabstandet angeordnet sind. Hierdurch kann eine verbesserte Zentrierung des Getriebes sowie ein verbesserter Toleranzausgleich bei gleichzeitiger Vermeidung von Unwuchten erreicht werden.

Gemäß einer Variante der Erfindung weisen die beiden Getriebeelemente jeweils eine Außenverzahnung auf, in die das Antriebselement eingreift. Alternativ kann je eine Innenverzahnung an den beiden Getriebeelementen vorgesehen sein, in die das Antriebselement eingreift.

Ferner kann die Verzahnung mindestens eines der beiden Getriebeelemente entlang des Umfanges des Getriebeelementes eine Variation in der Ausbildung der Zähne aufweisen. Hierdurch kann eine Nichtlinearität in der Übersetzung erzielt werden. So besteht die Möglichkeit, am entsprechenden Getriebeelement Blindbereiche vorzusehen, bei deren Zusammenwirken mit dem Antriebselement keine Relativbewegung der beiden Getriebeelemente erfolgt, also durch die Abtasteinrichtung auch keine entsprechend veränderten Ausgangssignale (Sensorsignale) erzeugt werden. Damit kann der Verschleiß der Abtasteinrichtung insbesondere bei Geradeausfahrt minimiert werden. Im Grenzfall läßt sich bei dieser Ausführungsform eher ein Umschalten der beiden Getriebeelemente zueinander als ein kontinuierliches Verdrehen erreichen.

In einer bevorzugten Weiterbildung der Erfindung ist das Antriebselement derart beweglich gelagert, dass hiermit Toleranzen hinsichtlich der Position der beiden auf einer gemeinsamen Achse angeordneten und mit dem Antriebselement in Eingriff befindlichen Getriebeelemente ausgeglichen werden können. Da diese Getriebeelemente vorzugsweise auf der Lenkachse einer Lenkradanordnung anzuordnen sind, wirken sich Toleranzen hinsichtlich der Anordnung und Ausbildung der Lenksäule der Lenkradanordnung unmittelbar auch auf die Position der besagten Getriebeelemente aus. Typischerweise treten an einer Lenksäule Radialtoleranzen und Axialtoleranzen mit einer Größenordnung von zwei Millimeter sowie eine Verkippung (Schlag) von bis zu zwei Grad auf. Zum Ausgleich derartiger Toleranzen in der Position der Getriebeelemente ist das zugeordnete Antriebselement in radialer und/oder axialer Richtung beweglich. Dabei ist das Antriebselement vorzugsweise elastisch in Richtung auf eine Vorzugsposition vorgespannt, in der es mit den Getriebeelementen in Eingriff steht, und kann zum Ausgleich von Toleranzen derart bewegt werden, dass der Eingriff in die Getriebeelemente aufrecht erhalten wird. Das heißt, das mittels mindestens eines elastischen Elementes federnd gelagerte Antriebselement kann sich an toleranzbedingte Abweichungen in der Position der zugehörigen Getriebeelemente axial bzw. radial anpassen.

Neben der einfachen Möglichkeit eines Toleranzausgleichs zeichnet sich die erfindungsgemäße Lösung auch dadurch aus, dass - im Gegensatz zu üblichen Planetengetrieben - die Krafteinleitung in das als Lenkwinkelmesssystem dienende Getriebe über das Planetenrad als Antriebselement erfolgt. Denn dieses wird bei Drehung des Lenkrades auf einer Kreisbahn bewegt, deren Mittelpunkt durch die Mittelachse der beiden mit dem Antriebselement zusammenwirkenden Getriebeelemente gebildet wird, wobei das Antriebselement, sich um die eigene Achse drehend, auf den Getriebeelementen abrollt. Hierdurch sowie insbesondere durch das Zusammenfallen der Lenkachse mit der Mittelachse der Getriebeelemente wird ein besonders einfacher, kompakter Aufbau des Getriebes mit nur wenigen Getriebeelementen ermöglicht.

Weitere Merkmale und Vorteile der Erfindung werden bei der nachfolgende Beschreibung eines Ausführungsbeispiels anhand der Figuren deutlich werden.

Es zeigen:
- Fig. 1: Eine Explosionsdarstellung einer Vorrichtung zur Bestimmung des Lenkwinkels eines Lenkrades mit zwei koaxial hintereinander angeordneten Zahnrädern mit Außenverzahnung und einem mit beiden Zahnrädern in Eingriff stehenden Antriebsritzel, das bei Änderung des Lenkwinkels mitgenommen wird;
- Fig. 2a: eine Unteransicht der Vorrichtung aus Figur 1 im montierten Zustand;
- Fig. 2b: eine perspektivische Ansicht der Vorrichtung aus Figur 1 im montierten Zustand;
- Fig. 2c: eine Seitenansicht der Vorrichtung aus Figur 1 im montierten Zustand;
- Fig. 3a: eine Explosionsdarstellung einer ersten Abwandlung des Ausführungsbeispiels aus den Figuren 1 bis 2c;
- Fig. 3b: die Vorrichtung aus Figur 3a im teilweise zusammengebauten Zustand;
- Fig. 3c: eine Seitenansicht der Vorrichtung aus den Figuren 3a und 3b;
- Fig. 4a: eine Explosionsdarstellung einer zweiten Abwandlung der Vorrichtung aus den Figuren 1 bis 2c, wobei die beiden koaxial gelagerten Zahnräder jeweils eine Innenverzahnung aufweisen;
- Fig. 4b: die Vorrichtung aus Figur 4a im teilweise zusammengebauten Zustand;
- Fig. 4c: eine Seitenansicht der Vorrichtung aus den Figuren 4a und 4b.

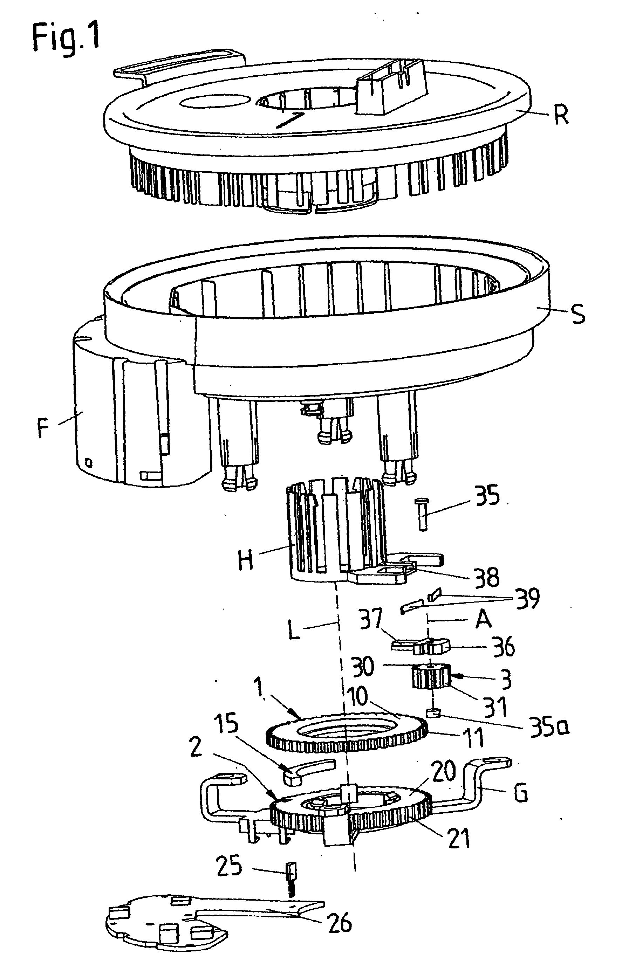

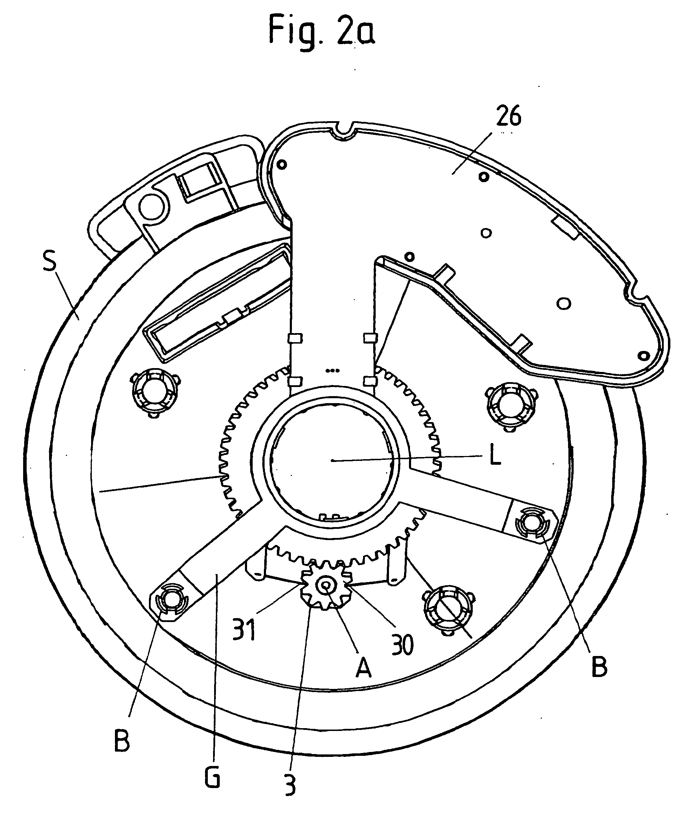

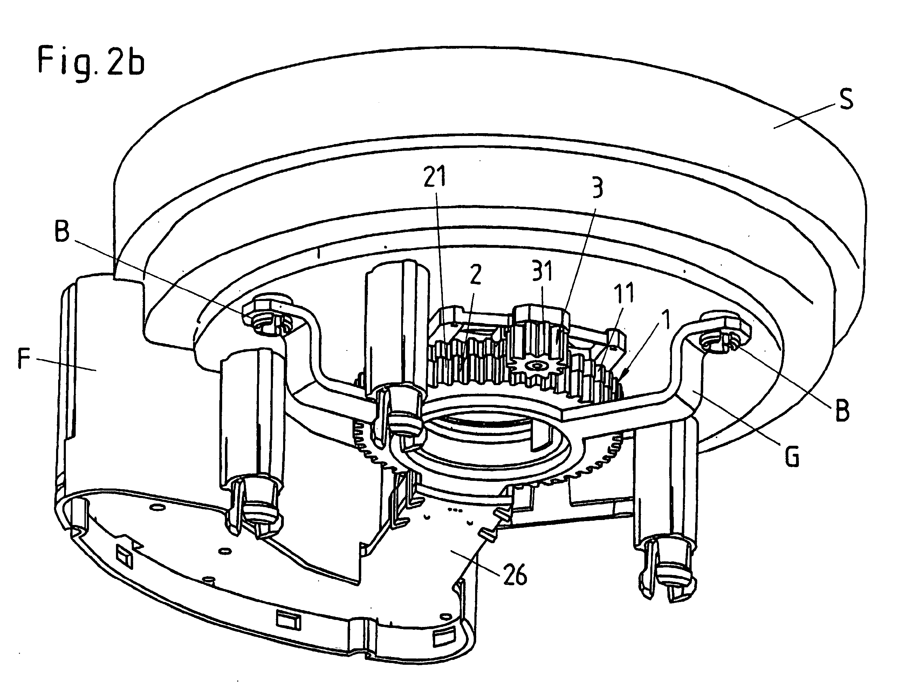

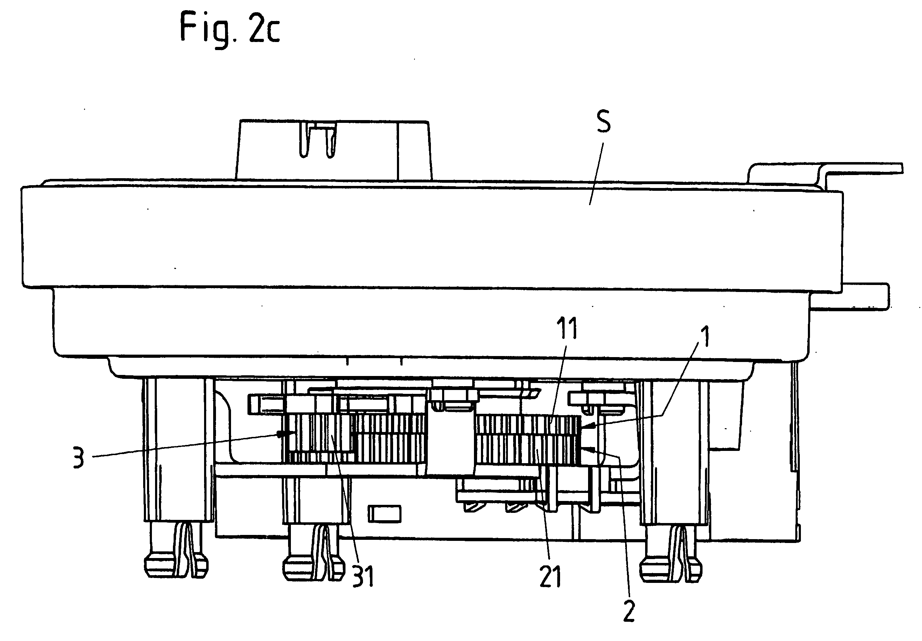

In den Figuren 1 bis 2c ist in verschiedenen Ansichten eine Lenkwinkelsensoreinrichtung für ein Kraftfahrzeug mit einem Rotor R und einem Stator S dargestellt. Der Rotor R ist derart mit dem Lenkrad verbunden, zum Beispiel über eine Lenkspindel, dass er bei einer Drehung des Lenkrades um die Lenkachse L gedreht wird. Der Stator S ist demgegenüber mittels geeigneter Befestigungselemente an einer nicht gemeinsam mit dem Lenkrad bewegbaren, ortsfesten Baugruppe des Kraftfahrzeugs befestigt. Die in Figur 1 dargestellte Rotor-Stator-Anordnung ist derart ausgelegt, dass sie zur Übertragung elektrischer Signale zwischen Rotor R und Stator S mittels elektrischer Leitungen geeignet ist, die sich vom Rotor zum Stator erstrecken und die bei einer Drehbewegung auf- beziehungsweise abgewickelt werden. Eine derartige Rotor-Stator-Anordnung ist beispielsweise aus der DE 200 07 862 U1 bekannt. Hierauf wird hinsichtlich weiterer Einzelheiten der Rotor-Stator-Anordnung und insbesondere deren Kopplung mit einer Lenkeinrichtung voll inhaltlich Bezug genommen.

Die Besonderheit der in den Figuren 1 bis 2c dargestellten Anordnung liegt in der Vorrichtung zur Erfassung des Lenkwinkels, d.h., desjenigen Winkels, um den der Rotor bei einer Drehung des Lenkrades verdreht wird. Es geht dabei nicht in erster Linie um die Bestimmung des Lenkwinkels innerhalb einer Umdrehung des Lenkrades, d.h., in einem Winkelbereich zwischen 0° und 360°, sondern vielmehr insbesondere um die Bestimmung der Anzahl an Umdrehungen des Lenkrades ausgehend von einer definierten Referenzlage des Lenkrades.

Die hierfür vorgesehene Vorrichtung umfasst zwei koaxial auf der Lenkachse L hintereinander angeordnete Zahnräder 1, 2 mit einem ringförmigen Grundkörper 10, 20 und je einer Außenverzahnung 11, 12. Das eine Zahnrad 1 ist frei drehbar auf der Lenkachse L gelagert und das andere Zahnrad 2 ist über ein Gestell G und Befestigungsmittel B drehfest am Stator S festgelegt.

Den beiden zueinander verdrehbaren Zahnrädern 1,2 ist ein Planetenzahnrad 3 zugeordnet, das mittels eines Lagerbolzens 35 und eines Lagerstückes 36, welches mittels eines Befestigungsabschnittes 37 radial verschieblich bezüglich der Lenkachse L in einer T-Nut 38 am äußeren Rand der Aufnahmehülse H aufgenommen ist, drehbar am äußeren Rand einer Aufnahmehülse H gelagert ist, die fest mit dem Rotor R verbunden ist, also sich gemeinsam mit diesem dreht. Dies bedeutet, dass bei einer Drehung des Rotors R (ausgelöst durch eine Drehung des zugeordneten Lenkrades) die Hülse H gemeinsam mit dem Rotor R um die Lenkachse L verschwenkt wird und dass hierbei das Planetenzahnrad 3 durch die Hülse H mitgenommen wird.

Die auf dem Grundkörper 30 des Planetenzahnrades 3 vorgesehene Verzahnung 31 ist derart ausgebildet, daß sie sowohl mit der Außenverzahnung 11 des frei drehbar gelagerten ersten Zahnrades 1 als auch mit der Außenverzahnung 21 des zweiten, drehfest gelagerten Zahnrades 2 kämmt. Dies bedeutet, dass bei einer Drehung des Lenkrades und somit des Rotors R zusammen mit der Aufnahmehülse H das Planetenzahnrad 3 mit seiner Verzahnung 31 auf den Außenverzahnungen 11, 21 der beiden Zahnräder 1, 2 abrollt. Da das Planetenzahnrad 3 mittels des Lagerbolzens 35 und des Lagerstückes 36, das mittels seines Befestigungsabschnittes 37 längsverschieblich in einer T-Nut 38 am äußeren Rand der Aufnahmehülse H aufgenommen ist, um eine parallel zur Lenkachse L verlaufende Achse A drehbar gelagert ist, dreht sich das Planetenzahnrad 3 hierbei um seine Achse A.

Aufgrund der längsverschieblichen Anordnung des Lagerstükkes 36 und damit auch des hierauf gelagerten Planetenzahnrades 3 lassen sich Toleranzen in der Position der auf der Längsachse L angeordneten Zahnräder 1, 2 in radialer Richtung ausgleichen. Derartige Toleranzen sind darauf zurückzuführen, dass die die Längsachse L definierende Lenksäule einer Lenkeinrichtung typischerweise Radialtoleranzen in einer Größenordnung von etwa zwei Millimeter aufweist. Diese können vorliegend in einfacher Weise durch radiales Verschieben des Befestigungsabschnittes 37 des Lagerstückes 36 in der zugeordneten T-Nut 38 ausgeglichen werden. Das Lagerstück 36 ist dabei durch elastische Mittel 39 in Form von Federstahlelementen bezüglich der T-Nut 38 der Aufnahmehülse H radial in Richtung auf die Zahnräder 1, 2 vorgespannt und liegt kontinuierlich an diesen an. Zum Ausgleich von Toleranzen lässt sich das Lagerstück 36 unter der Wirkung dieser Vorspannung radial bezüglich der Lenkachse L in jeweils die Position bringen, in der der Eingriff mit den Zahnrädern 1, 2 gewährleistet ist.

Durch Verschieben des Lagerstückes 36 zusammen mit dem Planetenzahnrad 3 auf dem als Schraube ausgebildeten Lagerbolzen 35, der axial an einem Ende durch den Schraubenkopf und am anderen Ende durch eine Mutter 35a begrenzt ist, lassen sich zudem auch axiale Toleranzen hinsichtlich der Anordnung der Zahnräder 1, 2 ausgleichen. Schließlich ermöglicht eine kombinierte Bewegung des Lagerstückes 36 in axialer Richtung (entlang der Lenkachse L) sowie radial (senkrecht zur Lenkachse L) einen Ausgleich von Verkippungen der Lenksäulen (Schlag), die typischerweise bis zu zwei Grad betragen.

Neben dem vorstehend erläuterten, einfachen Toleranzausgleich zeichnet sich das in den Figuren 1 bis 2c dargestellte Getriebe durch seinen einfachen Aufbau mit einer geringen Zahl an Getriebeelementen (insgesamt drei Getriebeelemente 1, 2, 3) aus. Dies wird vor allem dadurch erreicht, dass die beiden Zahnräder 1, 2 auf der Lenkachse L angeordnet sind und dass die Krafteinleitung in das Getriebe über das Planetenzahnrad 3 erfolgt.

Die Verzahnung 31 des Antriebszahnrades 3 wird sozusagen gebildet durch zwei axial hintereinander angeordnete, identische (und daher in den Figuren nicht separat eingezeichneten) Verzahnungsbereiche, von denen der eine mit dem ersten Zahnrad 1 und der zweite mit dem zweiten Zahnrad 2 in Eingriff steht. Gegebenenfalls können die beiden Verzahnungsbereiche auch eine unterschiedliche Verzahnung aufweisen.

Die Außenverzahnungen 11, 21 der beiden auf der Lenkachse L gelagerten Zahnräder 1, 2 weisen vorzugsweise das gleiche oder ein ähnliches Zahnmodul auf wie die Verzahnung 31 des Planetenzahnrades 3.

Die beiden Zahnräder 1, 2 weisen jedoch eine geringfügig unterschiedliche Zähnezahl auf, z. B. 49 Zähne einerseits und 50 Zähne andererseits, was zur Folge hat, dass es bei einem Umlauf des Planetenzahnrades 3 zu einer geringfügigen Verdrehung der beiden Zahnräder 1, 2 zueinander kommt, d. h., das frei drehbar gelagerte erste Zahnrad 1 wird geringfügig bezüglich des drehfest angeordneten zweiten Zahnrades 2 verdreht.

Der Versatz der beiden Zahnräder 1, 2 nach einer Umdrehung des Zahnrades kann mittels einer hierfür vorgesehenen Sensoreinrichtung 15, 25 erfaßt werden; und entsprechendes gilt für den zunehmenden Versatz bei jeder weiteren Drehung des Lenkrades und somit des Rotors R, bei der das Planetenzahnrad 3 mitgenommen wird und auf den Außenverzahnungen 11, 21 der beiden auf der Lenkachse L gelagerten Zahnräder 1, 2 abrollt. Bei einer hinreichend geringen Differenz in der Anzahl der Zähne der beiden Außenverzahnungen 11, 21 und einer entsprechend großen Übersetzung kann erreicht werden, dass bei der maximal möglichen Anzahl an Drehungen des Lenkrades (z. B. zehn Umdrehungen) der Versatz der beiden Zahnräder 1, 2 zueinander (also die relative Verdrehung des frei drehbar gelagerten ersten Zahnrades 1 bezüglich des drehfest angeordneten Zahnrades 2) maximal 360° oder weniger beträgt. In diesem Fall läßt sich aus jeder Stellung der beiden Zahnräder 1, 2 zueinander unmittelbar die Anzahl der Umdrehungen des Rotors R und damit des Lenkrades ablesen.

Die Auflösung innerhalb einer Umdrehung (entsprechend einem Lenkwinkel zwischen 0° und 360°) ist hierdurch geringer, so dass für eine genaue Bestimmung des Lenkwinkels innerhalb einer Umdrehung gegebenenfalls ein zusätzlicher Sensor eingesetzt werden muss. Die zur Bestimmung der Anzahl an Umdrehungen vorgesehene Vorrichtung kann dann zusätzlich zur Überwachung dieses weiteren Sensors anhand von Plausibilitätskontrollen eingesetzt werden.

Die Sensoreinrichtung 15, 25 wird vorliegend durch einen Magneten 15 gebildet, der sich ringartig entlang eines Teiles des Umfanges des ersten Zahnrades 1 erstreckt. Dieser Magnet 15 erzeugt einen magnetischen Code, der durch ein zugeordnetes magnetfeldempfindliches und auf einer Platine 26 gelagertes Sensorelement 25 abtastbar ist. Die Platine 26 ist an einem Fortsatz F des Stators S befestigt, so dass das magnetfeldempfindliche Sensorelement 25 ortsfest gelagert ist. Das Magnetfeld am Ort des Sensorelementes 25 hängt somit von der Relativposition des den Magneten 15 tragenden ersten Zahnrades 1 bezüglich des zweiten Zahnrades 2 ab. Hierdurch läßt sich die Relativposition der beiden Zahnräder 1, 2 und somit - wie oben erläutert - der absolute Drehwinkel (unter Einschluß der Anzahl an Umdrehungen des Lenkrades und somit des Rotors R) bestimmen.

Anstelle von zwei auf der Lenkachse L gelagerten Zahnrädern können hierfür bei Bedarf auch mehr Zahnräder verwendet werden.

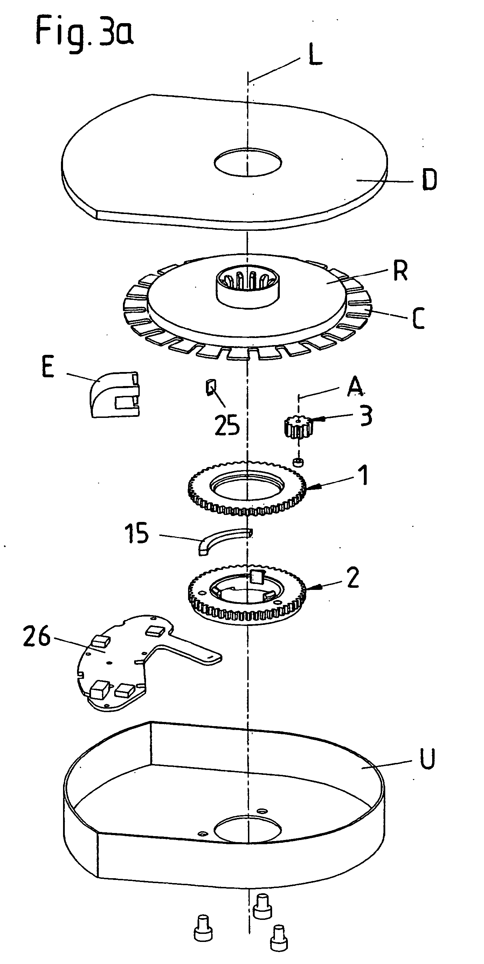

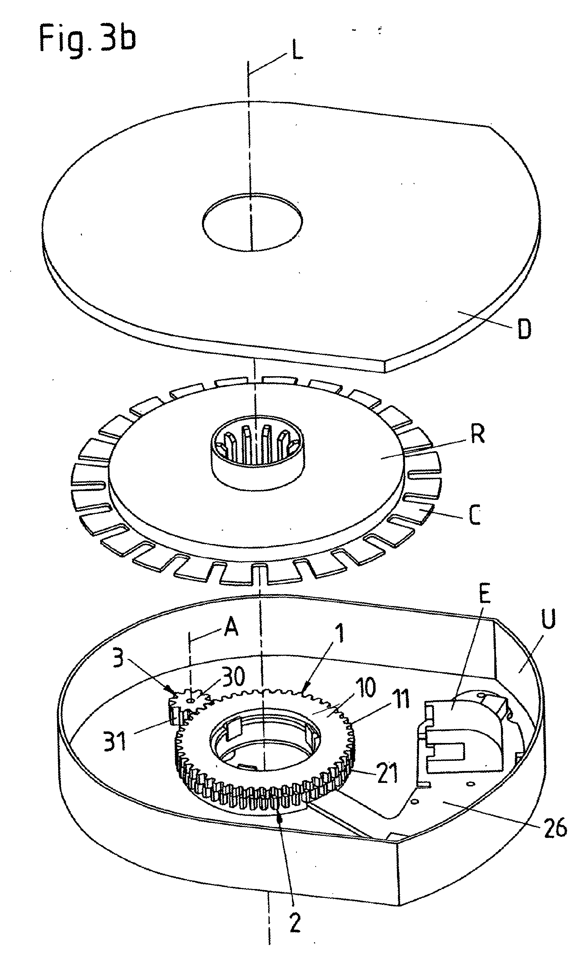

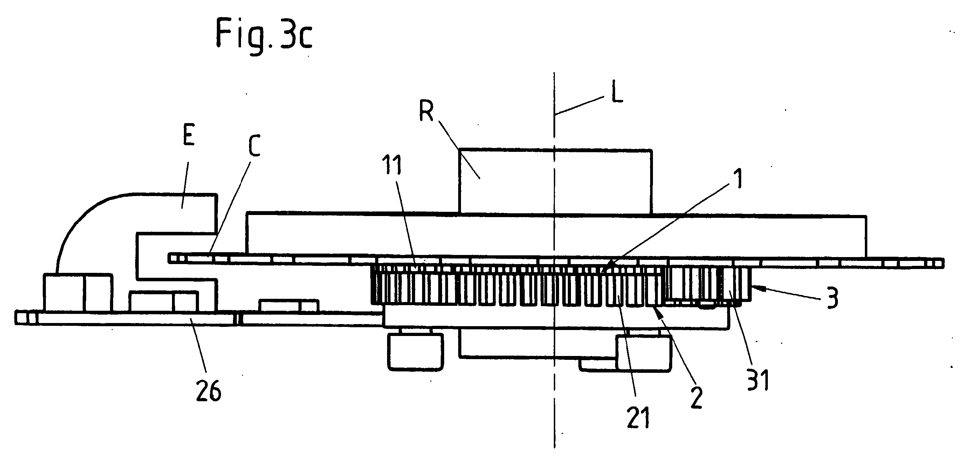

Das in den Figuren 3a bis 3c dargestellte Ausführungsbeispiel der Erfindung unterscheidet sich von dem anhand der Figuren 1 bis 2c Beschriebenen im wesentlichen dadurch, dass die Rotor-Stator-Anordnung nicht zur Übertragung elektrischer Signale zwischen Rotor und Stator ausgebildet ist. Der Stator wird in diesem Fall durch ein einfaches Gehäuse, bestehend aus einem Unterteil U und einem Deckel D gebildet, in dem der Rotor R drehbar gelagert ist.

Ein weiterer Unterschied besteht darin, dass der Rotor R an seinem Umfang mit einer mittels einer Erfassungseinrichtung E optisch abtastbaren Codierung C versehen ist. Diese dient zur genaueren Bestimmung des Lenkwinkels innerhalb einer Umdrehung des Lenkrades. Die hierbei verwendete Erfassungseinrichtung E kann in üblicher Weise einen Sender sowie einen zugeordneten Empfänger umfassen, mit dem die Codierung C, zum Beispiel im Durchlichtverfahren, abgetastet wird.

Im Übrigen stimmt das anhand der Figuren 3a bis 3c dargestellte Ausführungsbeispiel mit dem anhand der Figuren 1 bis 2c erläuterten überein, so dass diesbezüglich auf die Ausführungen zu den Figuren 1 bis 2c verwiesen wird.

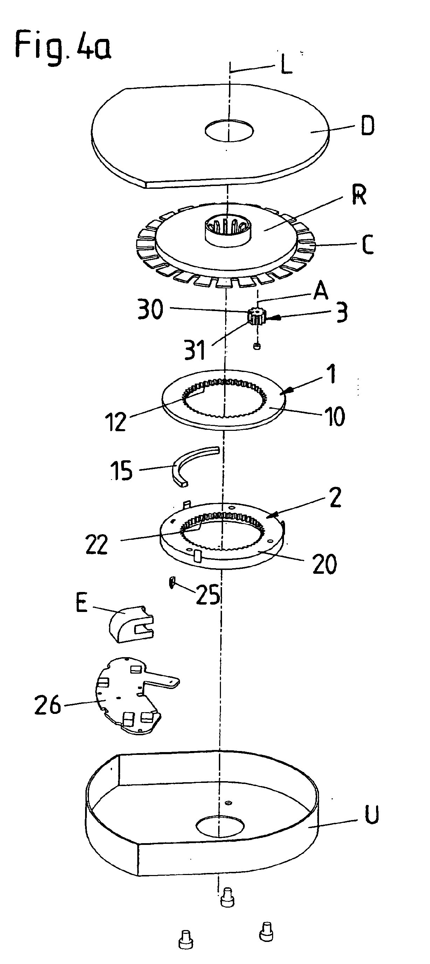

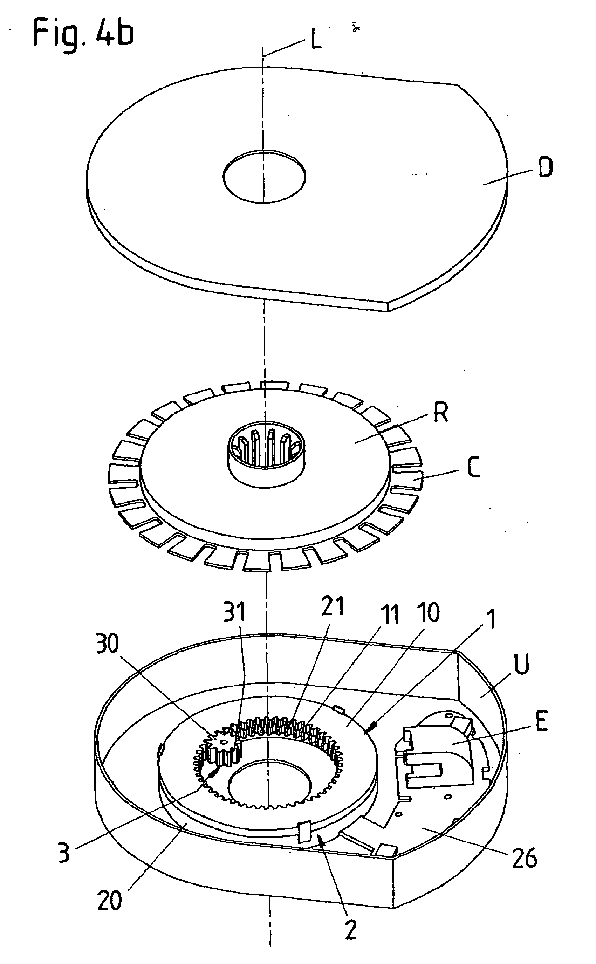

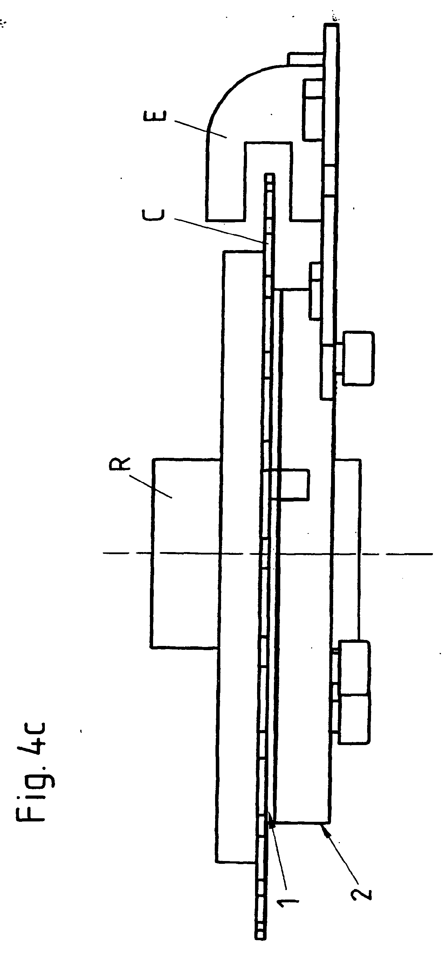

In den Figuren 4a bis 4c ist eine Abwandlung des Ausführungsbeispiels aus den Figuren 3a bis 3c dargestellt, wobei der einzige Unterschied darin besteht, dass die beiden auf der Lenkachse L koaxial hintereinander angeordneten Zahnräder 1, 2 jeweils mit einer Innenverzahnung 12 bzw. 22 versehen sind und dass die Verzahnung 31 des Antriebszahnrades 3 dementsprechend mit den Innenverzahnungen 12, 22 kämmt. Das Antriebszahnrad 3 ist hierzu innerhalb des Ringes angeordnet, der durch die Grundkörper 10, 20 der beiden koaxial angeordneten Zahnräder 1, 2 gebildet wird.

Bei dem anhand der Figuren 3a bis 3c und 4a bis 4c dargestellten Ausführungsbeispielen der Erfindung ist zusätzlich zu einer groben Bestimmung des vollständigen Lenkwinkels (über die gesamte Anzahl an Umdrehungen des Lenkrades, also insbesondere über 360 Grad hinaus) mittels der Zahnräder 1, 2, 3 noch eine feine Bestimmung des Lenkwinkels während einer Umdrehung (d.h. jeweils zwischen 0° und 360°) mittels des durch eine Erfassungseinrichtung E abtastbaren Codes C möglich. Die mittels der Zahnräder 1, 2, 3 und der zugeordneten Sensoreinrichtung 15, 25 generierten Messergebnissen des Lenkwinkels können dabei neben der Bestimmung der Anzahl an Umdrehungen des Lenkrades (ausgehend von einer Referenzlage) auch für eine Plausibilitätsprüfung des mittels der Erfassungseinrichtung E bestimmten Lenkwinkels dienen.

## Patentansprüche

1. Vorrichtung zur Bestimmung des Lenkwinkels eines Lenkrades, mit einem Codeträger und mit einer Einrichtung zur Abtastung eines auf dem Codeträger vorgesehenen Codes, die bei einer Änderung des Lenkwinkels zueinander verdreht werden, wobei die Einrichtung zur Abtastung des Codes ein Ausgangssignal erzeugt, aus dem der Lenkwinkel ermittelbar ist,
**dadurch gekennzeichnet,**
**dass** der Codeträger durch eines von zwei auf einer gemeinsamen Achse (L) hintereinander angeordneten Getriebeelementen (1, 2) gebildet werden, die mit einem durch das Lenkrad angetriebenen Antriebselement (3) in Wirkverbindung stehen und die bei einer Änderung des Lenkwinkels zueinander verdreht werden.

2. Vorrichtung nach Anspruch 1, **dadurch gekennzeichnet, dass** die Getriebeelemente (1, 2) jeweils eine Verzahnung (11, 21; 12, 22) aufweisen, die mit mindestens einer Gegenverzahnung (31) des Antriebselementes (3) in Eingriff steht.

3. Vorrichtung nach Anspruch 1 oder 2, **dadurch gekennzeichnet, dass** die Getriebeelemente (1, 2) durch Zahnräder gebildet werden.

4. Vorrichtung nach einem der vorhergehenden Ansprüche, **dadurch gekennzeichnet, dass** die beiden Getriebeelemente (1, 2) bei einer Änderung des Lenkwinkels um einen Winkel zueinander verdreht werden, der kleiner als die Änderung des Lenkwinkels ist.

5. Vorrichtung nach einem der vorhergehenden Ansprüche, **dadurch gekennzeichnet, dass** die beiden Getriebeelemente (1, 2) bei der maximal üblichen Änderung des Lenkwinkels um einen Winkel von weniger als 360° zueinander verdreht werden.

6. Vorrichtung nach einem der vorhergehenden Ansprüche, **dadurch gekennzeichnet, dass** die beiden Getriebeelemente (1, 2) auf der Lenkachse (L) gelagert sind.

7. Vorrichtung nach einem der vorhergehenden Ansprüche, **dadurch gekennzeichnet, dass** eines der beiden Getriebeelemente (1, 2) drehfest und das andere drehbar auf der gemeinsamen Achse gelagert ist und dass das drehbar gelagerte Getriebeelement (1) als Codeträger dient.

8. Vorrichtung nach einem der Ansprüche 2 bis 7, **dadurch gekennzeichnet, dass** die beiden Getriebeelemente (1, 2) eine unterschiedliche Zähnezahl aufweisen.

9. Vorrichtung nach einem der vorhergehenden Ansprüche, **dadurch gekennzeichnet, dass** das Antriebselement (3) drehbar gelagert ist.

10. Vorrichtung nach einem der vorhergehenden Ansprüche, **dadurch gekennzeichnet, dass** das Antriebselement (3) bei einer Drehung des Lenkrades entlang einer die Lenkachse (L) umschließenden Bahn bewegt wird.

11. Vorrichtung nach einem der vorhergehenden Ansprüche, **dadurch gekennzeichnet, dass** das Antriebselement (3) als Zahnrad ausgebildet ist.

12. Vorrichtung nach einem der vorhergehenden Ansprüche, **dadurch gekennzeichnet, dass** das Antriebselement (3) auf einer Achse (A) drehbar gelagert ist, die parallel zur Lenkradachse (L) verläuft.

13. Vorrichtung nach einem der vorhergehenden Ansprüche, **dadurch gekennzeichnet, dass** das Antriebselement (3) zwei axial hintereinander angeordnete Verzahnungsbereiche aufweist, von denen jeder mit einem der beiden Getriebeelemente (1, 2) in Eingriff steht.

14. Vorrichtung nach Anspruch 13, **dadurch gekennzeichnet, dass** die beiden Verzahnungsbereiche die gleiche Anzahl an Zähnen aufweisen.

15. Vorrichtung nach einem der vorhergehenden Ansprüche, **dadurch gekennzeichnet, dass** mehrere Antriebselemente (3) vorgesehen sind, die entlang des Umfangs der beiden Getriebeelemente (1, 2) voneinander beabstandet angeordnet sind.

16. Vorrichtung nach einem der vorhergehenden Ansprüche, **dadurch gekennzeichnet, dass** die beiden Getriebeelemente (1, 2) jeweils eine Außenverzahnung (11, 21) aufweisen.

17. Vorrichtung nach einem der Ansprüche 1 bis 15, **dadurch gekennzeichnet, dass** die beiden Getriebeelemente (1, 2) jeweils eine Innenverzahnung (11, 22) aufweisen.

18. Vorrichtung nach einem der Ansprüche 2 bis 17, **dadurch gekennzeichnet, dass** die Verzahnung (11, 21; 12, 22) mindestens eines der beiden Getriebeelemente (1, 2) entlang des Umfanges des jeweiligen Getriebeelementes (1, 2) eine Variation in der Ausbildung der Zähne aufweist.

19. Vorrichtung nach einem der vorhergehenden Ansprüche, **dadurch gekennzeichnet, dass** der Code mittels der Abtasteinrichtung (25) nach einem elektrischen, magnetischen oder optischen Prinzip abgetastet wird.

20. Vorrichtung nach einem der vorhergehenden Ansprüche, **dadurch gekennzeichnet, dass** das Antriebselement (3) in radialer Richtung und/oder axialer Richtung bezüglich der gemeinsamen Achse (L) der Getriebeelemente (1, 2) verschieblich gelagert ist.

21. Vorrichtung nach Anspruch 20, **dadurch gekennzeichnet, dass** das Antriebselement (3) in Richtung auf die Getriebeelemente (1, 2) federbelastet ist.

22. Vorrichtung nach Anspruch 20 oder 21, **dadurch gekennzeichnet, dass** das Antriebselement (3) an einem radial verschieblichen Lagerstück (36) gelagert ist.

23. Vorrichtung nach einem der vorhergehenden Ansprüche, **dadurch gekennzeichnet, dass** die Antriebskraft in das durch die Getriebeelemente (1, 2) und das Antriebselement (3) gebildete Getriebe durch das Antriebselement (3) eingeleitet wird.

24. Vorrichtung nach einem der vorhergehenden Ansprüche, **dadurch gekennzeichnet, dass** zusätzlich eine Erfassungseinrichtung (E) mit einem zugeordneten Code (C) zur Bestimmung des Lenkwinkels innerhalb einer Umdrehung des Lenkrades vorgesehen ist.

## Claims

1. Device for determining the steering angle of a steering wheel, having a code carrier and having a device for sensing a code which is provided on the code carrier, which code carrier and device are rotated with respect to one another when the steering angle changes, the device for sensing the code generating an output signal from which the steering angle can be determined, **characterized in that** the code carrier are [sic] formed by one of two gear mechanism elements (1, 2) which are arranged one behind the other on a common axle (L) and which are operatively connected to a drive element (3) driven by the steering wheel, and which are rotated with respect to one another when the steering angle changes.

2. Device according to Claim 1, **characterized in that** the gear mechanism elements (1, 2) each have a toothing (11, 21; 12, 22) which engages with at least one corresponding toothing (31) of the drive element (3).

3. Device according to Claim 1 or 2, **characterized in that** the gear mechanism elements (1, 2) are formed by gearwheels.

4. Device according to one of the preceding claims, **characterized in that**, when there is a change in the steering angle, the two gear mechanism elements (1, 2) are rotated with respect to one another through an angle which is smaller than the change in the steering angle.

5. Device according to one of the preceding claims, **characterized in that**, when there is the maximum customary change in the steering angle, the two gear mechanism elements (1, 2) are rotated with respect to one another through an angle of less than 360°.

6. Device according to one of the preceding claims, **characterized in that** the two gear mechanism elements (1, 2) are mounted on the steering axle (L).

7. Device according to one of the preceding claims, **characterized in that** one of the two gear mechanism elements (1, 2) is mounted fixed in terms of rotation, and the other is mounted in a rotatable fashion, on the common axle, and **in that** the rotatably mounted gear mechanism element (1) is used as a code carrier.

8. Device according to one of Claims 2 to 7, **characterized in that** the two gear mechanism elements (1, 2) have a different number of teeth.

9. Device according to one of the preceding claims **characterized in that** the drive element (3) is rotatably mounted.

10. Device according to one of the preceding claims, **characterized in that**, when the steering wheel rotates, the drive element (3) is moved along a path which encloses the steering axle (L).

11. Device according to one of the preceding claims, **characterized in that** the drive element (3) is embodied as a gearwheel.

12. Device according to one of the preceding claims, **characterized in that** the drive element (3) is rotatably mounted on an axle (A) which runs parallel to the axle (L) of the steering wheel.

13. Device according to one of the preceding claims, **characterized in that** the drive element (3) has two toothing regions which are arranged axially one behind the other, each of which is in engagement with one of the two gear mechanism elements (1, 2).

14. Device according to Claim 13, **characterized in that** the two toothing regions have the same number of teeth.

15. Device according to one of the preceding claims, **characterized in that** a plurality of drive elements (3) are provided which are spaced apart from one another along the circumference of the two gear mechanism elements (1, 2).

16. Device according to one of the preceding claims, **characterized in that** the two gear mechanism elements (1, 2) each have an external toothing (11, 21).

17. Device according to one of Claims 1 to 15, **characterized in that** the two gear mechanism elements (1, 2) each have an internal toothing (11, 22).

18. Device according to one of Claims 2 to 17, **characterized in that** the toothing (11, 21; 12, 22) of at least one of the two gear mechanism elements (1, 2) has a variation in the formation of the teeth along the circumference of the respective gear mechanism elements (1, 2).

19. Device according to one of the preceding claims, **characterized in that** the code is sensed by means of the sensing device (25) according to an electrical, magnetic or optical principle.

20. Device according to one of the preceding claims, **characterised in that** the drive element (3) is mounted so as to be capable of movement in a radial and/or axial direction relative to the common axle (L) of the gear elements (1, 2).

21. Device according to claim 20, **characterised in that** the drive element (3) is spring-biased in the direction to the gear elements (1, 2).

22. Device according to claim 20 or 21, **characterised in that** the drive element (3) is mounted to a radially movable bearing element (36).

23. Device according to one of the preceding claims, **characterised in that** the drive load is transmitted into the gear mechanism formed by the gear elements (1, 2) and the drive element (3) through the drive element (3).

24. Device according to one of the preceding claims, **characterized in that** a sensing device (E) with an assigned code (C) is additionally provided for determining the steering angle within a rotation of the steering wheel.

## Revendications

1. Dispositif pour la détermination de l'angle de braquage d'un volant, pourvu d'un support de code et d'un dispositif pour l'exploration d'un code prévu sur le support de code, lesquels, lors d'une modification de l'angle de braquage, sont tournés l'un vers l'autre, le dispositif d'exploration du code produisant un signal de sortie, à partir duquel l'angle de braquage peut être déterminé,
**caractérisé en ce que**
le support de code est formé par l'intermédiaire d'un de deux éléments d'engrenage (1, 2) agencés l'un derrière l'autre sur un axe commun (L), qui sont en relation active avec un élément d'entraînement (3) entraîné par l'intermédiaire du volant et qui sont tournés l'un vers l'autre lors d'une modification de l'angle de braquage.

2. Dispositif selon la revendication 1, **caractérisé en ce que** les éléments d'engrenage (1, 2) sont chacun pourvus d'une denture (11, 21 ; 12, 22), qui est en prise avec au moins une denture opposée (31) de l'élément d'entraînement (3).

3. Dispositif selon la revendication 1 ou 2, **caractérisé en ce que** les éléments d'engrenage (1, 2) sont formés par des roues dentées.

4. Dispositif selon l'une quelconque des revendications précédentes, **caractérisé en ce que** les deux éléments d'engrenage (1, 2) sont tournés l'un vers l'autre, lors d'une modification de l'angle de braquage, d'un angle qui est plus petit que la modification de l'angle de braquage.

5. Dispositif selon l'une quelconque des revendications précédentes, **caractérisé en ce que** les deux éléments d'engrenage (1, 2) sont tournés l'un vers l'autre lors de la modification maximale habituelle de l'angle de braquage selon un angle inférieur à 360°.

6. Dispositif selon l'une quelconque des revendications précédentes, **caractérisé en ce que** les deux éléments d'engrenage (1, 2) sont articulés sur l'axe de braquage (L).

7. Dispositif selon l'une quelconque des revendications précédentes, **caractérisé en ce qu'**un des deux éléments d'engrenage (1, 2) est fixe en rotation et l'autre est articulé en rotation sur l'axe commun, et **en ce que** l'élément d'engrenage articulé en rotation (1) sert de support de code.

8. Dispositif selon l'une quelconque des revendications 2 à 7, **caractérisé en ce que** les deux éléments d'engrenage (1, 2) sont pourvus d'un nombre différent de dents.

9. Dispositif selon l'une quelconque des revendications précédentes, **caractérisé en ce que** l'élément d'entraînement (3) est articulé en rotation.

10. Dispositif selon l'une quelconque des revendications précédentes, **caractérisé en ce que** l'élément d'entraînement (3) est déplacé par une rotation du volant le long d'un trajectoire entourant l'axe de braquage (L).

11. Dispositif selon l'une quelconque des revendications précédentes, **caractérisé en ce que** l'élément d'entraînement (3) est formé d'une roue dentée.

12. Dispositif selon l'une quelconque des revendications précédentes, **caractérisé en ce que** l'élément d'entraînement (3) est articulé en rotation sur un axe (A), qui s'étend parallèlement à l'axe du volant (L).

13. Dispositif selon l'une quelconque des revendications précédentes, **caractérisé en ce que** l'élément d'entraînement (3) est pourvu de deux zones de denture agencées axialement l'une derrière l'autre, chacune étant en prise avec un des deux éléments d'engrenage (1, 2).

14. Dispositif selon la revendication 13, **caractérisé en ce que** les deux zones de denture présentent le même nombre de dents.

15. Dispositif selon l'une quelconque des revendications précédentes, **caractérisé en ce que** plusieurs éléments d'entraînement (3) sont prévus, lesquels sont agencés de manière espacée les uns des autres le long de la circonférence des deux éléments d'engrenage (1, 2).

16. Dispositif selon l'une quelconque des revendications précédentes, **caractérisé en ce que** les deux éléments d'engrenage (1, 2) sont chacun pourvus d'une denture extérieure (11, 21).

17. Dispositif selon l'une quelconque des revendications 1 à 15, **caractérisé en ce que** les deux éléments d'engrange (1, 2) sont chacun pourvus d'une denture intérieure (11,22).

18. Dispositif selon l'une quelconque des revendications 2 à 17, **caractérisé en ce que** la denture (11, 21 ; 11, 22) d'au moins un des deux éléments d'engrenage (1, 2) sont pourvus d'une variation dans la réalisation des dents le long de la circonférence de chaque élément d'engrenage (1, 2).

19. Dispositif selon l'une quelconque des revendications précédentes, **caractérisé en ce que** le code est déterminé à l'aide du dispositif d'exploration (25) selon un principe électrique, magnétique ou optique.

20. Dispositif selon l'une quelconque des revendications précédentes, **caractérisé en ce que** l'élément d'entraînement (3) est articulé de manière à pouvoir être déplacé radialement et/ou axialement par rapport à l'axe commun (L) des éléments d'engrenage (1, 2).

21. Dispositif selon la revendication 20, **caractérisé en ce que** l'élément d'entraînement (3) est commandé élastiquement dans la direction des éléments d'engrenage (1, 2).

22. Dispositif selon la revendication 20 ou 21, **caractérisé en ce que** l'élément d'entraînement (3) est articulé sur une pièce (36) pouvant être déplacée radialement.

23. Dispositif selon l'une quelconque des revendications précédentes, **caractérisé en ce que** la force motrice est envoyée dans l'engrenage formé par les éléments d'engrenage (1, 2) et l'élément d'entraînement (3) à l'aide de l'élément d'entraînement (3).

24. Dispositif selon l'une quelconque des revendications précédentes, **caractérisé en ce qu'**un dispositif de saisie (E) est prévu en outre avec un code (C) associé pour déterminer l'angle de braquage au cours d'une rotation du volant.
